# EUROPEAN PATENT APPLICATION

(11) **EP 4 773 320 A1**
(43) Date of publication of application: **08.07.2026**
(21) Application number: 24859162.0
(22) Date of filing: 04.07.2024
(51) Int. Cl.: H01M 10/0587, H01M 4/131, H01M 4/134, H01M 4/36, H01M 4/38, H01M 10/052, H01M 50/107, H01M 50/119, H01M 50/531

(54) **NON-AQUEOUS ELECTROLYTE SECONDARY BATTERY**

(30) Priority: 30.08.2023 JP 2023140056
(71) Applicant: Panasonic Intellectual Property Management Co., Ltd., Kadoma-shi, Osaka 571-0057 (JP)
(72) Inventor: TSUKASAKI, Takashi, kadoma-shi, Osaka 571-0057 (JP); MATSUMOTO, Katsumasa, kadoma-shi, Osaka 571-0057 (JP)
(74) Representative: Novagraaf International SA
(86) International application number: PCT/JP2024/024220
(87) International publication number: WO 2025/047117

(57) **Abstract**

According to the present invention, a positive electrode active material contains a lithium-containing composite oxide, a negative electrode active material contains a silicon-containing material, and the discharge capacity per 1.0 g of a negative electrode mixture layer (52) is at least 0.5 Ah. A negative electrode lead (21) is connected to a winding start-side end part of a negative electrode (12). The negative electrode (12) has, on a winding start side of an electrode body (14), a non-facing part (61) that does not face a positive electrode (11), and the negative electrode mixture layer (52) is provided on at least a part of at least one surface of the non-facing part (61). When the distance between a negative electrode current collector (51) of a first starting end facing part (12a) in the negative electrode (12), which faces a winding start end (11a) of the positive electrode (11) on an outer winding side, and a negative electrode current collector (51) of a second starting end facing part (12b) in the negative electrode (12), which faces the winding start end (11a) on an inner winding side, is x, and the thickness of the negative electrode mixture layer (52) in the first starting end facing part (12a) is y, x/y>4.5 is satisfied.

## Description

### TECHNICAL FIELD

The present disclosure relates to a non-aqueous electrolyte secondary battery.

### BACKGROUND ART

As non-aqueous electrolyte secondary batteries, there is conventionally a cylindrical battery disclosed in Patent Literature 1. The cylindrical battery comprises an electrode assembly having a positive electrode and a negative electrode wound through a separator, and a bottomed cylindrical housing can that houses the electrode assembly and that has an opening on one side, and the positive electrode has a positive electrode mixture layer arranged on a positive electrode current collector, while the negative electrode has a negative electrode mixture layer arranged on a negative electrode current collector.

The cylindrical battery has a first negative electrode current collector exposed portion where the negative electrode current collector is exposed at the end portion on a winding start side of the negative electrode, and a second negative electrode current collector exposed portion where the negative electrode current collector is exposed at the end portion on a winding finish side of the negative electrode. The first negative electrode current collector exposed portion is joined to a first negative electrode lead, while the second negative electrode current collector exposed portion is joined to a second negative electrode lead.

### CITATION LIST

### PATENT LITERATURE

PATENT LITERATURE 1: Japanese Unexamined Patent Application Publication No. 2012-023011

### SUMMARY

In the above cylindrical battery, negative electrode leads are joined to both a winding start-side end portion and a winding finish-side end portion of the negative electrode, so that a current collection path can be shortened and battery resistance can be reduced. In this way, when the negative electrode current collector exposed portion where the negative electrode current collector is exposed is provided at the end portion on the winding start side of the negative electrode, and the negative electrode lead is joined to the negative electrode current collector exposed portion, it is easy to implement a configuration that can shorten the current collection path and it is easy to achieve high output.

However, the inventor of the present application has found that when the negative electrode lead is joined to the winding start-side end portion of the negative electrode, a gap between the negative electrodes on the winding start side in the electrode assembly becomes smaller, which makes it difficult for the electrolyte to evenly penetrate into the electrode and thereby causes a rise in resistance increase rate. Accordingly, it is an advantage of the present disclosure to provide a non-aqueous electrolyte secondary battery that can easily achieve high output and can also restrain the resistance increase rate.

In order to solve the above problem, a non-aqueous electrolyte secondary battery according to the present disclosure comprises: an electrode assembly having a positive electrode and a negative electrode wound through a separator; a non-aqueous electrolyte; and a bottomed cylindrical housing can that houses the electrode assembly and the non-aqueous electrolyte, wherein the positive electrode includes a positive electrode current collector and a positive electrode mixture layer arranged on the positive electrode current collector, the negative electrode includes a negative electrode current collector and a negative electrode mixture layer arranged on the negative electrode current collector, the positive electrode mixture layer contains a lithium-containing composite oxide as a positive electrode active material, the negative electrode mixture layer contains a silicon-containing material as a negative electrode active material, a discharge capacity per 1.0 g of the negative electrode mixture layer is greater than or equal to 0.5 Ah, a first negative electrode current collector exposed portion where a negative electrode lead is connected and the negative electrode current collector is exposed is provided at an end portion on a winding start side of the negative electrode, the negative electrode has a non-facing portion that does not face the positive electrode on a winding start side of the electrode assembly, the negative electrode mixture layer is provided on at least a portion on at least one surface of the non-facing portion, and x/y > 4.5 is satisfied, where x is a distance between the negative electrode current collector at a first start-end facing portion that faces a winding start end of the positive electrode on a winding outer side in the negative electrode and the negative electrode current collector at a second start-end facing portion that faces the winding start end of the positive electrode on a winding inner side in the negative electrode, and y is a thickness of the negative electrode mixture layer in the first start-end facing portion.

According to the non-aqueous electrolyte secondary battery according to the present disclosure, it is possible to easily achieve high output and to also restrain the resistance increase rate.

### BRIEF DESCRIPTION OF DRAWING

FIG. 1 is an axial sectional view of a cylindrical battery according to an embodiment of the present disclosure.
FIG. 2 is a perspective view of an electrode assembly.
FIG. 3 is a schematic view schematically showing an example of the structure of a negative electrode mixture layer.
FIG. 4 is a schematic plan view showing a winding structure on the winding inner side of the electrode assembly.
FIG. 5 is an enlarged schematic plan view around a positive electrode start end portion in FIG. 4.

### DESCRIPTION OF EMBODIMENTS

Hereinafter, an embodiment of a non-aqueous electrolyte secondary battery according to the present disclosure will be described in detail with reference to the drawings. It is assumed from the beginning that a new embodiment is constructed by appropriately combining characteristic portions of the embodiment or modifications thereof as will be described below. In the embodiment below, like component members are designated by like reference signs to omit redundant description. The plurality of drawings also include schematic drawings, and throughout the different drawings, dimensional ratios of length, width, height, and the like do not necessarily match for each member. In this specification, the side of a sealing assembly 17 in an axial direction (height direction) of a cylindrical non-aqueous electrolyte secondary battery 10 is defined as "upper side", and the side of a bottom portion 68 of a housing can 16 in the axial direction is defined as "lower side". Among the component members described below, those not included in an independent claim that represents the highest-level concept are optional and not essential component members. The present disclosure is also not limited to the embodiment and its modifications disclosed, and various improvements and changes are possible without departing from the scope of the Claims of the present application and any equivalents thereof.

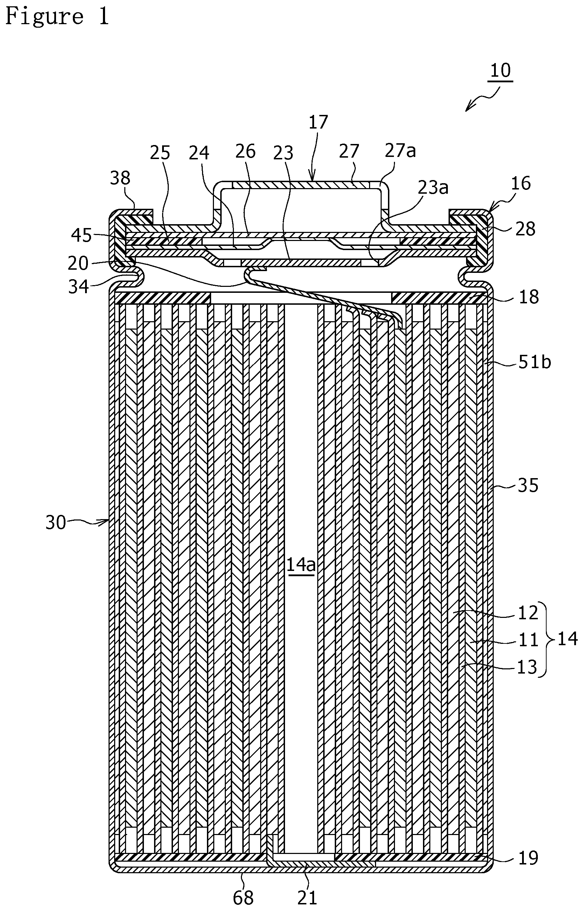

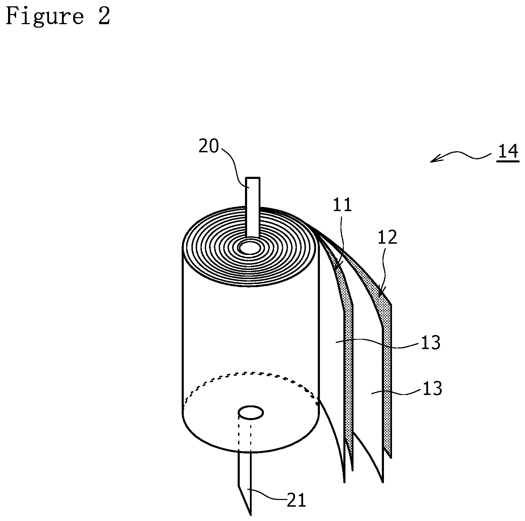

FIG. 1 is an axial sectional view of a cylindrical non-aqueous electrolyte secondary battery 10 according to an embodiment of the present disclosure, and FIG. 2 is a perspective view of an electrode assembly 14 of the non-aqueous electrolyte secondary battery 10. As shown in FIG. 1, the non-aqueous electrolyte secondary battery (hereinafter simply referred to as the battery) 10 comprises a winding type electrode assembly 14, a non-aqueous electrolyte (not shown), a bottomed cylindrical metallic housing can 16 that houses the electrode assembly 14 and the non-aqueous electrolyte, and a sealing assembly 17 that seals an opening portion of the housing can 16. As shown in FIG. 2, the electrode assembly 14 has a winding structure formed by winding a long-shaped positive electrode 11 and a long-shaped negative electrode 12 through two long-shaped separators 13.

In order to prevent lithium deposition, the negative electrode 12 is formed with a dimension that is slightly larger than the positive electrode 11. Specifically, the negative electrode 12 is formed to be longer in a longitudinal direction and a width direction (short direction) than the positive electrode 11. The two separators 13 are also formed with a dimension that is at least slightly larger than the positive electrode 11 and are arranged, for example, to hold the positive electrode 11 therebetween. The negative electrode 12 may constitute a winding start end of the electrode assembly 14. However, the separators 13 typically extend beyond a winding start-side end of the negative electrode 12, and the winding start-side ends of the separators 13 constitute the winding start end of the electrode assembly 14.

The non-aqueous electrolyte has ion conductivity (for example, lithium ion conductivity). The non-aqueous electrolyte may be a liquid electrolyte (electrolyte solution) or a solid electrolyte. The liquid electrolyte (electrolyte solution) contains non-aqueous solvent and electrolyte salt solved in the non-aqueous solvent. As the non-aqueous solvent, there may be used, for example, esters, ethers, nitriles, amides, and mixed solvents of two or more of the group consisting of these. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen substituted product (e.g., fluoroethylene carbonate) that replaces at least some of the hydrogen in these solvents with halogen atoms such as fluorine. As the electrolyte salt, lithium salt such as LiPF₆ is used, for example.

As the solid electrolyte, there may be used, for example, solid or gel-like polymer electrolyte, inorganic solid electrolyte, or the like. The polymer electrolyte contains, for example, lithium salt and matrix polymer, or non-aqueous solvent, lithium salt, and matrix polymer. As the matrix polymer, a polymer material that turns into a gel by absorbing non-aqueous solvent is used, for example. As the polymer material, there may be used, for example, fluororesin, acrylic resin, and polyether resin, or the like. As the inorganic solid electrolyte, materials that are publicly known in all solid lithium-ion secondary batteries (e.g., oxide-based solid electrolyte, sulfide-based solid electrolyte, halogen-based solid electrolyte, etc.) may be used.

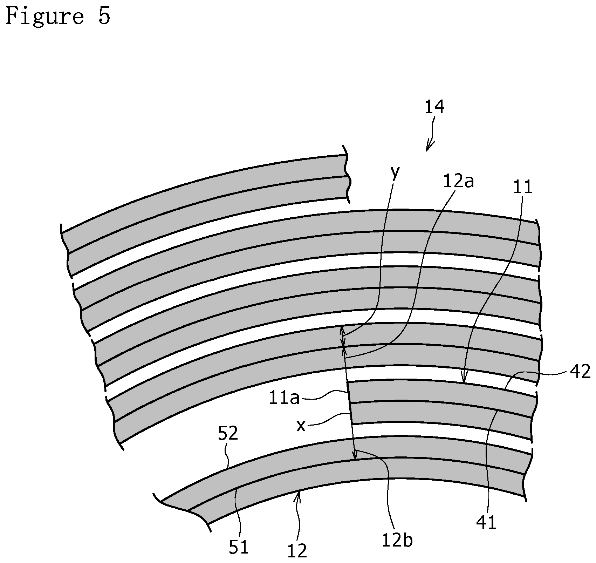

A positive electrode 11 includes a positive electrode current collector 41 (see FIG. 5) and a positive electrode mixture layer 42 arranged on both the surfaces of the positive electrode current collector 41 (see FIG. 5). As the positive electrode current collector 41, there may be used a foil made of metal, such as aluminum and aluminum alloy, that is stable in a potential range of the positive electrode 11, a film with the metal arranged on its surface layer, or the like. The positive electrode mixture layer 42 contains a positive electrode active material, a conductive agent, and a binding agent. The positive electrode 11 can be fabricated by, for example, coating the positive electrode current collector 41 with positive electrode mixture slurry containing a positive electrode active material, a conductive agent, and a binding agent, or the like, drying the coating, and then compressing the coating to form a positive electrode mixture layer 42 on both the surfaces of the positive electrode current collector 41.

The positive electrode active material is constituted with lithium-containing composite oxide as a main component. Examples of metal elements contained in the lithium-containing composite oxide (lithium-containing metal composite oxide) include Ni, Co, Mn, Al, B, Mg, Ti, V, Cr, Fe, Cu, Zn, Ga, Sr, Zr, Nb, In, Sn, Ta, and W. Preferable examples of the lithium-containing composite oxide include a composite oxide containing at least one of the group consisting of Ni, Co, Mn, and Al. The lithium-containing composite oxide may have a spinel structure and may have an olivine structure. However, the lithium-containing composite oxide preferably has a layered rock-salt structure because it facilitates the fabrication of the positive electrode with a large discharge capacity.

Examples of the conductive agent contained in the positive electrode mixture layer 42 may include carbon materials such as carbon black, acetylene black, Ketjenblack, and graphite. Examples of the binding agent contained in the positive electrode mixture layer 42 may include fluororesin such as polytetrafluoroethylene (PTFE), and polyvinylidene difluoride (PVdF), polyacrylonitrile (PAN), polyimide resin, acrylic resin, and polyolefin resin. These resins may be used in combination with cellulose derivatives such as carboxymethylcellulose (CMC) or its salts, polyethylene oxide (PEO), or the like.

A negative electrode 12 includes a negative electrode current collector 51 (see FIG. 5) and a negative electrode mixture layer 52 (see FIG. 5) arranged on both the surfaces of the negative electrode current collector 51. As the negative electrode current collector 51, there may be used a foil made of metal, such as copper and copper alloy, that is stable in a potential range of the negative electrode 12, a film with the metal arranged on its surface layer, or the like. The negative electrode mixture layer 52 contains a negative electrode active material and a binding agent. The negative electrode 12 can be fabricated by, for example, coating the negative electrode current collector 51 with negative electrode mixture slurry containing a negative electrode active material, and a binding agent, or the like, drying the coating, and then compressing the coating to form the negative electrode mixture layer 52 on both the surfaces of the negative electrode current collector 51.

As the negative electrode active material, a carbon material that reversibly absorbs and releases lithium ions is typically used. Preferable carbon materials include natural graphite such as flake graphite, massive graphite, and earthy graphite, and artificial graphite such as massive artificial graphite, and graphitized mesophase carbon microbeads. A discharge capacity per 1.0 g of the negative electrode mixture layer 52 is greater than or equal to 0.5 Ah. In order to effectively increase the discharge capacity per 1.0 g of the negative electrode mixture layer 52, the negative electrode mixture layer 52 preferably includes a silicon-containing material that contains silicon (Si) as a negative electrode active material.

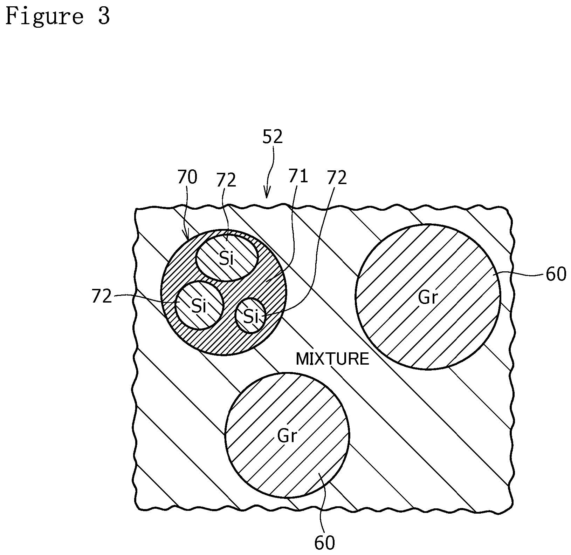

FIG. 3 is a schematic view schematically showing an example of the structure of the negative electrode mixture layer 52. As shown in FIG. 3, the negative electrode mixture layer 52 preferably contains a black lead (graphite) 60 and a silicon-containing material 70. The silicon-containing material 70 includes, for example, an ionically conductive phase 71 and an Si phase 72 dispersed in the ionically conductive phase 71. For easily achieving higher discharge capacity and high output of the battery 10, a weight ratio of the Si phase 72 in the silicon-containing material 70 is preferably greater than or equal to 30%. In addition, as a volume change in the negative electrode mixture layer 52 can be reduced during charging and discharging and the expansion and contraction of the electrode assembly 14 can be restrained during charging and discharging, the durability of the battery 10 is likely to be excellent, and therefore the weight ratio of the Si phase 72 in the silicon-containing material 70 is preferably less than or equal to 60%. The ionically conductive phase 71 may be constituted of, for example, an amorphous carbon phase, a lithium silicate phase, a silicon oxide phase, a titanium oxide phase, a zirconium oxide phase, or the like. However, the ionically conductive phase 71 preferably contains an amorphous carbon phase in order to restrain the volume change in the negative electrode active material during charging and discharging and to increase charging and discharging efficiency.

From the perspective of a weight ratio of the silicon element to the negative electrode mixture layer 52, the weight ratio of the silicon element to the negative electrode mixture layer 52 is preferably greater than or equal to 7 mass%, and more preferably greater than or equal to 12 mass% for high discharge capacity and high output of the battery 10. In addition, as the volume change in the negative electrode mixture layer 52 can be reduced during charging and discharging and the expansion and contraction of the electrode assembly 14 can be restrained during charging and discharging, the excellent durability of the battery 10 is achieved. Accordingly, the weight ratio of the silicon element to the negative electrode mixture layer 52 is preferably less than or equal to 50 mass%. In the case where the negative electrode mixture layer 52 contains the silicon-containing material 70, the mass of the silicon element may be equivalent to the mass of Si phase 72. In other words, the weight ratio of the Si phase 72 to the negative electrode mixture layer 52 may be greater than or equal to 7 mass% and less than or equal to 50 mass%. As the negative electrode active material, there may be used metals, other than Si, that alloy with lithium, or alloys containing the metals, and compounds containing the metals, or the like.

As the binding agent contained in the negative electrode mixture layer 52, there may be used, as in the case of the positive electrode 11, fluororesin, PAN, polyimide resin, acrylic resin, polyolefin resin, or the like, though styrene-butadiene rubber (SBR) or its modification products are preferably used. For example, the negative electrode mixture layer 52 may contain, in addition to SBR or the like, CMC or its salt, polyacrylic acid (PAA) or its salt, polyvinyl alcohol, or the like.

As the separators 13, a porous sheet with ion permeability and insulation properties is used. Specific examples of the porous sheet include microporous thin films, woven fabrics, and non-woven fabrics. Preferable materials of the separators 13 include polyolefin resin such as polyethylene and polypropylene, and cellulose. The separators 13 may have one of a single-layer structure and a multilayer structure. On the surface of the separators 13, a heat-resistant layer or the like may be formed.

As shown in FIG. 1, the positive electrode 11 is joined to a positive electrode lead 20, while an end portion on a winding start side in a longitudinal direction of the negative electrode 12 is joined to a negative electrode lead 21. The battery 10 has an insulating plate 18 above the electrode assembly 14 and an insulating plate 19 below the electrode assembly 14. The positive electrode lead 20 extends toward the sealing assembly 17 through a through-hole of the insulating plate 18, and the negative electrode lead 21 extends toward the bottom portion 68 of the housing can 16 through a through-hole of the insulating plate 19. The positive electrode lead 20 is connected to the lower surface of a sealing plate 23 of the sealing assembly 17 by welding or other processing. A terminal cap 27, which constitutes a top plate of the sealing assembly 17, is electrically connected to the sealing plate 23, so that the terminal cap 27 serves as a positive electrode terminal. The negative electrode lead 21 is connected to an inner surface of the bottom portion 68 of the metallic housing can 16 by welding or other processing, so that the housing can 16 serves as a negative electrode terminal.

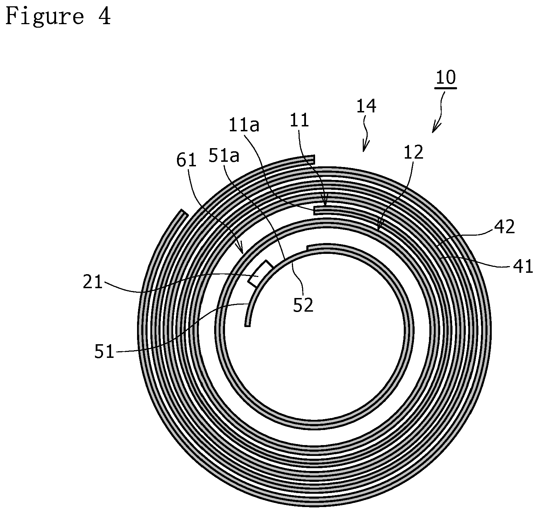

The positive electrode 11 has a positive electrode current collector exposed portion where the positive electrode current collector 41 is exposed in an intermediate portion such as a central portion in its winding direction, and the positive electrode lead 20 is electrically connected to the positive electrode current collector exposed portion. The negative electrode 12 also has a first negative electrode current collector exposed portion 51a (see FIG. 4) where the negative electrode current collector 51 is exposed at the end portion on a winding start side in its winding direction, and also has a second negative electrode current collector exposed portion 51b (see FIG. 1) where the negative electrode current collector 51 is exposed at the end portion on a winding finish side in its winding direction. The second negative electrode current collector exposed portion 51b has a portion that is included in the outermost surface of the electrode assembly 14. The negative electrode lead 21 is electrically connected to the first negative electrode current collector exposed portion 51a, and the second negative electrode current collector exposed portion 51b includes a portion that is in contact with the inner surface of the housing can 16. In this way, both the winding start side and the winding finish side of the negative electrode 12 are electrically connected to the negative electrode terminal, so that the current collection path is reduced and the electrical resistance is reduced.

Here, without bringing the winding finish-side end portion in the winding direction in the negative electrode current collector into contact with the inner surface of the housing can, only one negative electrode lead may be configured to be electrically connected to the winding finish-side end portion in the winding direction in the negative electrode current collector. Alternatively, two negative electrode leads may be joined to the electrode assembly, with one negative electrode lead electrically connected to the winding start-side end portion in the winding direction in the negative electrode current collector while the other negative electrode lead electrically connected to the winding finish-side end portion in the winding direction in the negative electrode current collector.

The battery 10 further comprises a resin gasket 28 arranged between the housing can 16 and the sealing assembly 17. The sealing assembly 17 is crimped and fixed to an opening portion of the housing can 16 through the gasket 28. As a result, internal space of the battery 10 is sealed. The gasket 28 is held between the housing can 16 and the sealing assembly 17 to insulate the sealing assembly 17 against the housing can 16. The gasket 28 functions as a sealing material to maintain the inside of the battery airtight and also functions as an insulating material to insulate between the housing can 16 and the sealing assembly 17.

The housing can 16 houses the electrode assembly 14 and non-aqueous electrolyte. The housing can 16 has a cylindrical portion 30 and the bottom portion 68, and the cylindrical portion 30 includes a shoulder portion 38 and a grooved portion 34. The grooved portion 34 can be formed by, for example, recessing a portion of the side surface of the housing can 16 radially inward in an annular shape by a spinning process performed in a radially inward direction. The shoulder portion 38 is formed by bending an upper end portion of the housing can 16 inward toward a circumferential edge portion 45 of the sealing assembly 17, when the sealing assembly 17 is crimped and fixed to the housing can 16.

The sealing assembly 17 has a structure formed by stacking the sealing plate 23, a lower vent member 24, an insulating member 25, an upper vent member 26, and the terminal cap 27 in order from the side of the electrode assembly 14. Each member constituting the sealing assembly 17 has, for example, a disc shape or a ring shape, and each member except the insulating member 25 is electrically connected to each other. The sealing plate 23 has at least one through-hole 23a. The lower vent member 24 and the upper vent member 26 are connected at their center portions, with the insulating member 25 being interposed between their respective circumferential edge portions.

When the battery 10 generates abnormal heat and the internal pressure of the battery 10 increases, the lower vent member 24 deforms so as to push the upper vent member 26 toward the terminal cap 27 and breaks, resulting in interruption of a current path between the lower vent member 24 and the upper vent member 26. As the internal pressure further increases, the upper vent member 26 breaks, so that gas is discharged through a through-hole 27a of the terminal cap 27. As the gas is discharged, excessive increase in internal pressure of the battery 10 and resultant busting of the battery 10 can be prevented, so that the safety of the battery 10 can be enhanced.

FIG. 4 is a schematic plan view showing a winding structure on the winding inner side of the electrode assembly 14. Here in FIG. 4, illustration of the separators 13 is omitted. As shown in FIG. 4, the negative electrode 12 includes a non-facing portion 61, which is wound from a facing portion facing the winding inner side of a start end 11a in the winding direction of the positive electrode 11 toward the winding start side in the state of not facing the positive electrode 11. The negative electrode mixture layer 52 is provided on at least a portion on at least one surface of the non-facing portion 61. The negative electrode 12 has the first negative electrode current collector exposed portion 51a where the negative electrode lead 21 is connected at the end portion on the winding start side and where the negative electrode current collector 51 is exposed. In the present embodiment, the first negative electrode current collector exposed portion 51a is provided on the winding outer surface of the negative electrode 12, and the negative electrode lead 21 is joined to the winding outer surface of the negative electrode 12. However, the first negative electrode current collector exposed portion may be provided on the winding inner surface of the negative electrode, and the negative electrode lead may be joined to the winding inner surface of the negative electrode.

The negative electrode mixture layer 52 is preferably provided on at least one surface of the non-facing portion 61. The non-facing portion 61 is also preferably wound greater than or equal to 0.75 turns. In such cases, an inner circumferential rigidity of the electrode assembly 14 can be increased, which restrains a hollow portion 14a (see FIG. 1) of the electrode assembly 14 from being blocked when the battery 10 generates abnormal heat. As a result, gas is smoothly discharged to the outside through the hollow portion 14a, which improves the safety of the battery 10. The non-facing portion 61 is also preferably wound less than or equal to 1.5 turns, and in that case, the capacity of the battery 10 is easily enlarged.

FIG. 5 is an enlarged schematic plan view around a positive electrode start end portion in FIG. 4. With reference to FIG. 5, x/y > 4.5 is established, where x is a distance between the negative electrode current collector 51 at a first start-end facing portion 12a that faces, in a radial direction (radial direction of the battery 10), a winding start end of the positive electrode 11 on a winding outer side in the negative electrode 12 and the negative electrode current collector 51 at a second start-end facing portion 12b that faces, in the radial direction, the winding start end of the positive electrode 11 on a winding inner side in the negative electrode 12, and y is a thickness of the negative electrode mixture layer 52 at the first start-end facing portion 12a.

As discussed later, the inventor has found that when x/y > 4.5 is established, the resistance increase rate can be remarkably restrained and the battery 10 that is less likely to deteriorate can be fabricated. A reason for this is inferred as follows: when x/y > 4.5 is established, the electrolyte is likely to penetrate evenly into the electrode assembly 14 regardless of the winding position of the electrode assembly 14, and therefore a uniform charge-discharge reaction is likely to occur regardless of the winding position of the negative electrode 12. Here, x/y < 7.0 is preferably established. When x/y < 7.0 is established, it is possible to prevent the negative electrode 12 from being excessively thinner than the positive electrode 11 and this can ensure smooth winding of the electrode assembly 14.

The conditions of x/y > 4.5 and x/y < 7.0 can be satisfied by adjusting the thickness of the positive electrode 11, the thickness of the negative electrode 12, the thickness of the separator 13, the inner diameter of a cylindrical portion 35 that radially faces the electrode assembly 14 in the housing can 16, and the thickness of the negative electrode mixture layer 52. These conditions are easily satisfied when the total thickness of the positive electrode 11 and the separators 13 between the negative electrode 12 and the negative electrode 12 is greater than or equal to 2.3 times and less than or equal to 5 times the thickness of a negative electrode mixture. The conditions of x/y > 4.5 and the x/y < 7.0 may be satisfied at at least either the timing after shipment and before use of the battery 10 or any timing during use of the battery 10. In addition, the conditions of x/y > 4.5 and x/y <7.0 may be established under normal temperature environment, and more precisely, at at least one temperature out of the temperatures greater than or equal to 15°C and less than or equal to 25°C. The value x can be measured based on a computed tomography (CT) image of the battery 10 (which is a CT image of a cross section that is orthogonal to the axial direction of the battery 10 and that passes through the electrode assembly 14). Note that the inner diameter of the cylindrical portion 35 (see FIG. 1), which radially faces the electrode assembly 14 in the battery 10, is a known value. As for the value y, the thickness of the negative electrode mixture layer 52 can be measured by disassembling the battery 10. Specifically, for example, the battery 10 is disassembled to extract the electrode assembly 14, and the thickness of the negative electrode 12 is measured. Then, the value y can be obtained by peeling off the negative electrode mixture layer 52 arranged on both the surfaces, measuring the thickness of the negative electrode current collector 51, and calculating (thickness of negative electrode 12 - thickness of negative electrode current collector 51)/2. Thus, it is possible to easily determine whether or not the conditions of x/y > 4.5 and x/y < 7.0 are satisfied.

Here, the description has been given of the case where the sealing assembly 17 has a stacked structure including two rapture plates (lower vent member 24 and upper vent member 26), and has the protruding terminal cap 27 that covers the rapture plates. However, the sealing assembly 17 may be constituted of only the rupture plates or may have a structure in which an internal terminal plate, an insulating plate, and a rapture plate are stacked in order from the electrode assembly side. Alternatively, the sealing assembly may not have any rapture plate, and the bottom of the housing can may have a thin-walled easily breakable portion that breaks when the battery generates abnormal heat.

### <Example 1>

In the above described cylindrical battery, a negative electrode discharge utilization rate (Ah/g) defined as discharge capacity of the negative electrode mixture layer per 1.0 g of the negative electrode mixture layer was set to 0.68 Ah, and a silicon element weight ratio (wt%) defined as the weight ratio of the silicon element to the negative electrode mixture layer was set to 15%. In addition, the second negative electrode current collector exposed portion to be in contact with the inner circumferential surface of the housing can was not provided, the value x was set to 374 µm, the value y was set to 80 µm, and the value x/y was set to 4.7.

The negative electrode discharge utilization rate was measured as follows. First, a fabricated battery was disassembled and an extracted negative electrode was placed to face lithium as a positive electrode. Then, discharge was conducted from the state where the negative electrode was 5 mV higher than lithium to the state where the negative electrode was 1 V higher than lithium. The negative electrode discharge utilization rate was calculated based on the charges released during the discharge.

The weight ratio of silicon element was measured using an inductively coupled plasma (ICP) after disassembling the fabricated battery. The ICP is a method of optical emission spectroscopy. When plasma energy is externally applied to an analysis sample, constituent elements (atoms) contained in the analysis sample are excited. In the ICP, emission lines (spectral lines) emitted when the excited atoms return to a lower energy level are measured, and based on the measured emission lines, the content of the constituent elements (atoms) is measured. The value x was confirmed based on the CT image. The value Y was confirmed by the method described above.

### <Example 2>

In the above described cylindrical battery, the discharge capacity per 1.0 g of the negative electrode mixture layer was set to 0.68 Ah and silicon element weight ratio wt% was set to 15%. In addition, the second negative electrode current collector exposed portion to be in contact with the inner circumferential surface of the housing can was provided, the value x was set to 374 µm, the value y was set to 80 µm, and the value x/y was set to 4.7. The negative electrode discharge utilization rate, the silicon element weight ratio, and the values x and y were measured in the same way as in Example 1.

### <Example 3>

In the above described cylindrical battery, the discharge capacity per 1.0 g of the negative electrode mixture layer was set to 0.90 Ah and the silicon element weight ratio wt% was set to 25%. In addition, the second negative electrode current collector exposed portion to be in contact with the inner circumferential surface of the housing can was not provided, the value x was set to 345 µm, the value y was set to 65 µm, and the value x/y was set to 5.3. The negative electrode discharge utilization rate, the silicon element weight ratio, and the values x and y were measured in the same way as in Example 1.

### <Example 4>

In the above described cylindrical battery, the discharge capacity per 1.0 g of the negative electrode mixture layer was set to 1.13 Ah and silicon element weight ratio wt% was set to 35%. In addition, the second negative electrode current collector exposed portion to be in contact with the inner circumferential surface of the housing can was not provided, the value x was set to 330 µm, the value y was set to 58 µm, and the value x/y was set to 5.7. The negative electrode discharge utilization rate, the silicon element weight ratio x, and y were measured in the same way as in Example 1.

### <Example 5>

In the above described cylindrical battery, the discharge capacity per 1.0 g of the negative electrode mixture layer was set to 1.13 Ah and the silicon element weight ratio wt% was set to 35%. In addition, the second negative electrode current collector exposed portion to be in contact with the inner circumferential surface of the housing can was provided, the value x was set to 330 µm, the value y was set to 58 µm, and the value x/y was set to 5.7. The negative electrode discharge utilization rate, the silicon element weight ratio, and the values x and y were measured in the same way as in Example 1.

### <Comparative Example 1>

In comparison with the cylindrical battery described above, the discharge capacity per 1.0 g of the negative electrode mixture layer was set to 0.43 Ah, which was less than 0.5 Ah, and the value x/y was set to 4.2, which was less than 4.5. The value x was also set to 344 µm, and the value y was set to 82 µm. The silicon element weight ratio wt% was set to 4%, and the second negative electrode current collector exposed portion to be in contact with the inner circumferential surface of the housing can was not provided. The negative electrode discharge utilization rate, the silicon element weight ratio x, and the thickness of the negative electrode mixture layer y were measured in the same way as in Example 1.

### <Comparative Example 2>

In comparison with the cylindrical battery described above, the value x/y was set to 4.4, which did not satisfy x/y > 4.5. The value x was also set to 396 m and the value y was set to 91 µm. The discharge capacity per 1.0 g of the negative electrode mixture layer was set to 0.68 Ah and the silicon element weight ratio wt% was set to 15%. The second negative electrode current collector exposed portion to be in contact with the inner circumferential surface of the housing can was not provided. The negative electrode discharge utilization rate, the silicon element weight ratio x, and y were measured in the same way as in Example 1.

### (Measurement of Capacity)

The capacity of each battery in Examples 1 to 5, and each battery in Comparative Examples 1, 2 was measured. Specifically, after each battery was fabricated, each battery was charged with a constant current of 0.3 C under the condition of 25°C until each battery voltage reached 4.2 V, and then each battery was charged at a constant voltage of 4.2 V until the current value reached 0.02 C. After a 20-minute pause, each battery was discharged with a constant current of 0.2 C until the battery voltage reached 2.5 V, and the capacity (discharge capacity) was measured. The capacity of each battery was calculated with the capacity of the battery in Example 1 being assumed to be 100.

### (Measurement of Direct Current Resistance)

Each battery in Examples 1 to 5 and each battery in Comparative Examples 1, 2 were charged to 4.2 V with a constant current of 0.3 C under the environment air-cooled to 45°C, and then charged at a constant voltage of 4.2 V until the current value reached 0.02 C. After a 20-minute pause, each battery was discharged with a constant current of 0.5 C until the battery voltage reached 2.85 V, and then another 20-minute pause was taken. This charge and discharge cycle was repeated 100 times. Then, under a temperature environment of 25°C, each battery was charged again at a constant voltage of 4.2 V with a constant current of 0.3 C until the capacity reached 50% of the initial capacity. The battery was then kept in an open circuit for one hour, and then a constant current discharge with a constant current of 0.5 C was performed for 10 seconds. Using an open circuit voltage (OCV), a closed circuit voltage (CCV) 10 seconds after discharge, and a current value 10 seconds after discharge (I10s), a post-cycle direct current resistance (DCR), (OCV - CCV)/110s, was calculated. One cycle of charge and discharge described above was performed before the 100-cycle test to measure an initial DC resistance DCR by the above-described method. A DCR increase rate was calculated by dividing the post-cycle direct current resistance DCR by the initial direct current resistance DCR. The DCR increase rate of each battery was calculated with the DCR increase rate in Example 1 being assumed to be 100.

### (Test Results)

**[Table 1]**

| | Negative electrode discharge utilization rate | Silicon element weight ratio | Second negative electrode current collector exposed portion | x/y | DCR increase rate | Capacity | x | y |
|---|---|---|---|---|---|---|---|---|
| | Ah/g | Wt% | - | - | index | index | µm | µm |
| Example 1 | 0.68 | 15 | Absent | 4.7 | 100 | 100 | 374 | 80 |
| Example 2 | 0.68 | 15 | Present | 4.7 | 97 | 101 | 374 | 80 |
| Example 3 | 0.90 | 25 | Absent | 5.3 | 99 | 103 | 345 | 65 |
| Example 4 | 1.13 | 25 | Absent | 5.7 | 98 | 108 | 330 | 58 |
| Example 5 | 1.13 | 35 | Present | 5.7 | 97 | 109 | 330 | 58 |
| Comparative Example 1 | 0.43 | 4 | Absent | 4.2 | 103 | 94 | 344 | 82 |
| Comparative Example 2 | 0.68 | 15 | Absent | 4.2 | 102 | 98 | 396 | 91 |

It was successfully confirmed that the battery in Comparative Example 1, which had the negative electrode discharge utilization rate of less than 0.5, had the capacity of 94, which was significantly smaller by 6% than the capacity of the battery in Example 1, which was the smallest in capacity among the batteries of Examples.

It was also successfully confirmed that the batteries in Comparative Examples 1 and 2, in which the value x/y was less than or equal to 4.5, had the DCR increase rate significantly larger by greater than or equal to 2% than even the battery in Example 1 having the largest DCR increase rate among the batteries in Examples 1 to 5. In other words, it was confirmed that the batteries in Examples 1 to 5, in which the value x/y was greater than 4.5, had the DCR increase rate significantly smaller, by greater than or equal to 1.98%, than even the battery in Comparative Example 1 having the smallest DCR increase rate.

Particularly, when a comparison is made between the batteries in Example 1 and Comparative Example 2, which had the same conditions regarding the negative electrode discharge utilization rate, the silicon element weight ratio, and the presence or absence of the second negative electrode current collector exposed portion and were different only in the value x/y, the battery in Example 1 has a DCR increase rate of 100 and a capacity of 100, whereas the battery in Comparative Example 2 has a DCR increase rate of 102, and a capacity of 98. In other words, in comparison with the battery in Example 1, the battery in Comparative Example 2 has a sharp rise in DCR increase rate by as large as 2% and a considerable decrease in capacity by as large as 2%. Based on these, it was confirmed that the value x/y had a decisive effect on the DCR increase rate and the capacity.

The inventor of the present invention has found, through the above described tests and numerous other tests, that when the value x/y becomes larger than 4.5, the DCR increase rate can be restrained and the capacity can be increased unless the negative electrode discharge utilization rate is less than 0.5. Note that as shown in Examples 1 to 5, when the value x/y is greater than or equal to 4.7 and less than or equal to 5.7, the DCR increase rate can be effectively restrained and the capacity can be effectively increased.

All of the batteries in Examples 1 to 5 have the silicon element weight ratio included in the range of greater than or equal to 7% and less than or equal to 50%. The inventor of the present invention has confirmed, through the above described tests and numerous other tests, that when the silicon element weight ratio is included in the range of greater than or equal to 7% and less than or equal to 50%, the DCR increase rate can be easily restrained and the capacity can be easily increased. Note that when the silicon element weight ratio is greater than or equal to 12%, the output of the battery 10 is likely to be high, and when the silicon element weight ratio is greater than or equal to 25%, the output of the battery 10 can be significantly increased.

Moreover, out of the batteries in Examples 1 to 5, the batteries in Examples 2 and 5, in which the second negative electrode current collector exposed portion was in contact with the inner circumferential surface of the housing can, had a lowest DCR increase rate of 94. Therefore, it was successfully confirmed that when the second negative electrode current collector exposed portion is brought into contact with the inner circumferential surface of the housing can, the current collection path can be shortened and the DCR increase rate can be effectively restrained.

Note that in order to make it easy to establish 4.5 < x/y < 7.0, 300 ≤ x ≤ 400 is preferably satisfied, and 320 ≤ x ≤ 380 is more preferably satisfied. Moreover, in order to make it easy to establish 4.5 < x/y < 7.0, 45 ≤ y ≤ 100 is preferably satisfied, and 50 ≤ y ≤ 90 is more preferably satisfied.

The cylindrical battery of the present disclosure may have following configurations.

Configuration 1: a non-aqueous electrolyte secondary battery, comprising: an electrode assembly having a positive electrode and a negative electrode wound through a separator; a non-aqueous electrolyte; and a bottomed cylindrical housing can that houses the electrode assembly and the non-aqueous electrolyte, wherein the positive electrode includes a positive electrode current collector and a positive electrode mixture layer arranged on the positive electrode current collector, the negative electrode includes a negative electrode current collector and a negative electrode mixture layer arranged on the negative electrode current collector, the positive electrode mixture layer contains a lithium-containing composite oxide as a positive electrode active material, the negative electrode mixture layer contains a silicon-containing material as a negative electrode active material, a discharge capacity per 1.0 g of the negative electrode mixture layer is greater than or equal to 0.5 Ah, a first negative electrode current collector exposed portion where a negative electrode lead is connected and the negative electrode current collector is exposed is provided at an end portion on a winding start side of the negative electrode, the negative electrode has a non-facing portion that does not face the positive electrode on a winding start side of the electrode assembly, the negative electrode mixture layer is provided on at least a portion on at least one surface of the non-facing portion, and x/y > 4.5 is satisfied, where x is a distance between the negative electrode current collector at a first start-end facing portion that faces a winding start end of the positive electrode on a winding outer side in the negative electrode and the negative electrode current collector at a second start-end facing portion that faces the winding start end of the positive electrode on a winding inner side in the negative electrode, and y is a thickness of the negative electrode mixture layer in the first start-end facing portion.

Configuration 2: the non-aqueous electrolyte secondary battery according to Configuration 1, wherein a second negative electrode current collector exposed portion that is in contact with an inner circumferential surface of the housing can and that exposes the negative electrode current collector is provided at a winding finish-end portion of the negative electrode.

Configuration 3: the non-aqueous electrolyte secondary battery according to Configuration 1 or 2, wherein the non-facing portion is wound greater than or equal to 0.75 turns.

Configuration 4: the non-aqueous electrolyte secondary battery according to any one of Configurations 1 to 3, wherein the non-facing portion is wound less than or equal to 1.5 turns.

Configuration 5: the non-aqueous electrolyte secondary battery according to any one of Configurations 1 to 4, wherein the silicon-containing material includes an ionically conductive phase and an Si phase dispersed in the ionically conductive phase.

Configuration 6: the non-aqueous electrolyte secondary battery according to Configuration 5, wherein the ionically conductive phase includes an amorphous carbon phase.

Configuration 7: the non-aqueous electrolyte secondary battery according to Configuration 5 or 6, wherein a weight ratio of the Si phase in the silicon-containing material is greater than or equal to 30% and less than or equal to 60%.

Configuration 8: the non-aqueous electrolyte secondary battery according to any one of Configurations 1 to 7, wherein a weight ratio of silicon element in the negative electrode mixture layer is greater than or equal to 7 mass%.

Configuration 9: the non-aqueous electrolyte secondary battery according to any one of Configurations 1 to 8, wherein a weight ratio of silicon element in the negative electrode mixture layer is less than or equal to 50 mass%.

Configuration 10: the non-aqueous electrolyte secondary battery according to any one of Configurations 1 to 9, wherein x/y < 7.0 is satisfied.

Configuration 11: the non-aqueous electrolyte secondary battery according to any one of Configurations 1 to 10, wherein the lithium-containing composite oxide has a layered rock-salt structure.

### REFERENCE SIGNS LIST

10 Non-aqueous electrolyte secondary Battery, 11 Positive electrode, 11a Start end of positive electrode, 12 Negative electrode, 12a First start-end facing portion, 12b Second start-end facing portion, 13 Separator, 14 Electrode assembly, 14a Hollow portion, 16 Housing can, 17 Sealing assembly, 18, 19 Insulating plate, 20 Positive electrode lead, 21 Negative electrode lead, 23 Sealing plate, 23a Through-hole, 24 Lower vent member, 25 Insulating member, 26 Upper vent member, 27 Terminal cap, 27a Through-hole, 28 Gasket, 30 Cylindrical portion, 34 Grooved portion, 35 Cylindrical portion, 38 Shoulder portion, 41 Positive electrode current collector, 42 Positive electrode mixture layer, 45 Circumferential edge portion, 51 Negative electrode current collector, 51a First negative electrode current collector exposed portion, 51b Second negative electrode current collector exposed portion, 52 Negative electrode mixture layer, 60 Black lead, 61 Non-facing portion, 68 Bottom portion, 70 Silicon-containing material, 71 Ionically conductive phase, 72 Si phase

## Claims

1. A non-aqueous electrolyte secondary battery, comprising:
an electrode assembly having a positive electrode and a negative electrode wound through a separator;
a non-aqueous electrolyte; and
a bottomed cylindrical housing can that houses the electrode assembly and the non-aqueous electrolyte, wherein
the positive electrode includes a positive electrode current collector and a positive electrode mixture layer arranged on the positive electrode current collector,
the negative electrode includes a negative electrode current collector and a negative electrode mixture layer arranged on the negative electrode current collector,
the positive electrode mixture layer contains a lithium-containing composite oxide as a positive electrode active material,
the negative electrode mixture layer contains a silicon-containing material as a negative electrode active material,
a discharge capacity per 1.0 g of the negative electrode mixture layer is greater than or equal to 0.5 Ah,
a first negative electrode current collector exposed portion where a negative electrode lead is connected and the negative electrode current collector is exposed is provided at an end portion on a winding start side of the negative electrode,
the negative electrode has a non-facing portion that does not face the positive electrode on a winding start side of the electrode assembly,
the negative electrode mixture layer is provided on at least a portion on at least one surface of the non-facing portion, and
x/y > 4.5 is satisfied, where x is a distance between the negative electrode current collector at a first start-end facing portion that faces a winding start end of the positive electrode on a winding outer side in the negative electrode and the negative electrode current collector at a second start-end facing portion that faces the winding start end of the positive electrode on a winding inner side in the negative electrode, and y is a thickness of the negative electrode mixture layer in the first start-end facing portion.

2. The non-aqueous electrolyte secondary battery according to Claim 1, wherein a second negative electrode current collector exposed portion that is in contact with an inner circumferential surface of the housing can and that exposes the negative electrode current collector is provided at a winding finish-end portion of the negative electrode.

3. The non-aqueous electrolyte secondary battery according to Claim 1, wherein the non-facing portion is wound greater than or equal to 0.75 turns.

4. The non-aqueous electrolyte secondary battery according to Claim 1, wherein
the non-facing portion is wound less than or equal to 1.5 turns.

5. The non-aqueous electrolyte secondary battery according to Claim 1, wherein the silicon-containing material includes an ionically conductive phase and an Si phase dispersed in the ionically conductive phase.

6. The non-aqueous electrolyte secondary battery according to Claim 5, wherein the ionically conductive phase includes an amorphous carbon phase.

7. The non-aqueous electrolyte secondary battery according to Claim 5, wherein a weight ratio of the Si phase in the silicon-containing material is greater than or equal to 30% and less than or equal to 60%.

8. The non-aqueous electrolyte secondary battery according to Claim 1, wherein a weight ratio of silicon element in the negative electrode mixture layer is greater than or equal to 7 mass%.

9. The non-aqueous electrolyte secondary battery according to Claim 1, wherein a weight ratio of silicon element in the negative electrode mixture layer is less than or equal to 50 mass%.

10. The non-aqueous electrolyte secondary battery according to Claim 1, wherein x/y < 7.0 is satisfied.

11. The non-aqueous electrolyte secondary battery according to Claim 1, wherein the lithium-containing composite oxide has a layered rock-salt structure.
